# EUROPEAN PATENT SPECIFICATION

(11) **EP 0 525 231 B1**
(45) Date of publication and mention of the grant of the patent: **18.10.1995**
(21) Application number: 91112813.0
(22) Date of filing: 30.07.1991
(51) Int. Cl.: A01G 9/14

(54) **Greenhouse**
Gewächshaus
Serre

(43) Date of publication of application: 03.02.1993
(73) Proprietor: FULTOR HOUSE ENTERPRISE CO., LTD., Taipei (TW)
(72) Inventor: Hung-Tzu, Sung, Tainan (TW)
(74) Representative: Kador & Partner

(56) References cited:
- GB-A- 1 374 647
- GB-A- 1 402 261
- GB-A- 2 147 043
- GB-A- 2 238 220
- US-A- 4 023 306
- US-A- 4 038 791

## Description

This invention relates to a greenhouse to be mounted on a window opening, more particularly a greenhouse to grow plants at any places and under any climate conditions. More particularly, the invention promotes living standard and provides fresh air. Mostly, the invention may be treated like a paint on a wall or a screen patition.

Window gardens, or ornament plants grown in receptacles provided in the windows of the home, are a common sight among households, especially those households located in crowded and polluted locations.

Aside from making aesthetic contributions, the oxygen released from the photosynthetic reactions of the plants serves as a source of fresh air. However, since the receptacles containing the ornament plants are merely placed on the windsill, the ornament plants are susceptible to damage from inclement weather conditions. Furthermore, most plants can not survive in extremely cold temperatures, which, in temperate climates, are typical during the winter and autumn seasons.

GB-A-21 47 043 describes a greenhouse which can be mounted on a window opening having a window-sill. It is having an inner side and an outer side and comprising an enclosed housing fixedly mounted on the window opening. It is having a first window pane securely mounted to the outer side of the window opening and a second openable window pane is mounted to the inner side of the window opening.

The present invention improves this greenhouse from various aspects.

Therefore, the objective of the present invention is to provide a greenhouse to be mounted on a window opening, said greenhouse protecting the plants from bad weather and maintaining the temperature of the plants' immediate enviroment within an appropriate temperature range, thus ornament plants may grow regardless of seasonal weather conditions.

Accordingly, a greenhouse of the present invention includes an enclosed housing mounted on the window opening. The enclosed housing has a window pane fixedly mounted on the outer side of the window opening, a transparent board fixedly mounted on the inner portion adjacent to the outer window pane preferably made from plastic material which has a poor tenperature conducting so as to maintain the immediate surrounding temperature in a certain preferred temperature range, two openable panes laterally attached to the two sides of the fixed window pane to allow fresh air to flow into the enclosed housing, and two openable window panes hingedly attached to the inner side of the window opening. The windowsill of the window opening is provided with an elongated groove serving as a plant box to contain soil to grow plants. The plant box is accessible through the inner window pane. The greenhouse, further, includes a watering control means which may either be connected to a water faucet through a pipe member or to a receptacle of its own to supply water for the plants, a watering pipe member communicated with the water source and extending into the plant box, and a valve to control water flow from the water source to the pipe member. A surrounding temperature control means is similarily included in the enclosed housing for sensoring surrounding temperature, a cooling means to maintain the surrounding temperature below a maximum temperature requirement, a heating means to maintain the surrounding temperature above a minumum temperature requirement. A humidity control means to detect humidity of the enclosed housing A and maintain the humidity within a preferred limit. The greenhouse, further, includes a plurality of elongated lamps mounted in the enclosed housing and served as artificial light for the plants, and a plurality of reflectors to reflect light and to reflect the plants. The series of reflection of plants may result of a kaleidoscopic effect.

Other objects, together with the forgoing, are attained in the embodiment of the invention described in the accompanying description and illustrated in the accompanying drawings, in which:
FIG. 1 is a perspective view of the present invention;
FIG. 2 is a top view of the present invention;
FIG. 3 is a schematic diagram of FIG. 1 showing a correlationship between the structure and the wiring system of FIG. 1;
FIG. 4 is a block diagram of a temperature control means of FIG. 1;
FIG. 5 is a block diagram of watering control means of FIG. 1;
FIG. 6 is a block diagram of a humidity control means of FIG. 1;
FIG. 7 is a perspective view of the present invention showing a second embodiment;
FIG. 8 is a watering means of the present invention showing a second embodiment; and

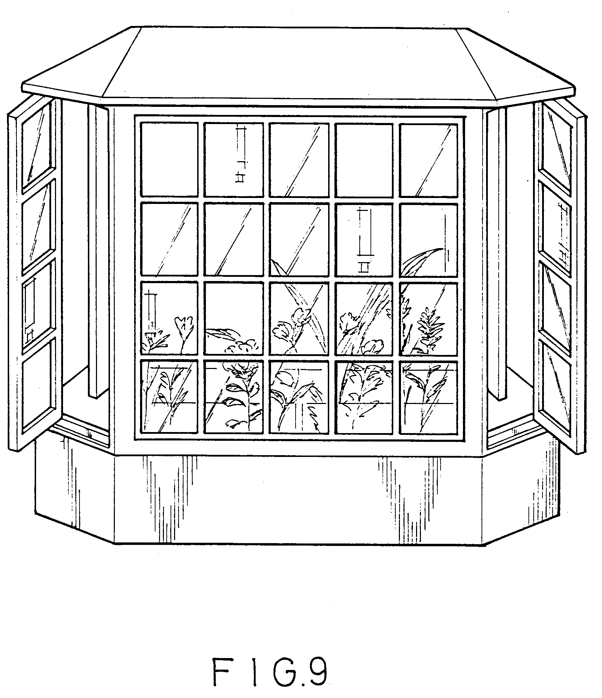

FIG. 9 is a perspective view of the present invention mounted on a window opening taken from outside.

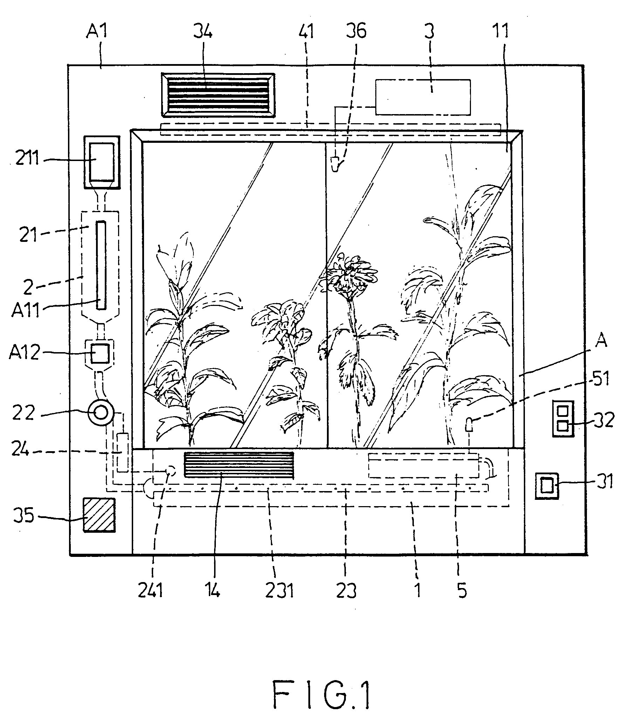

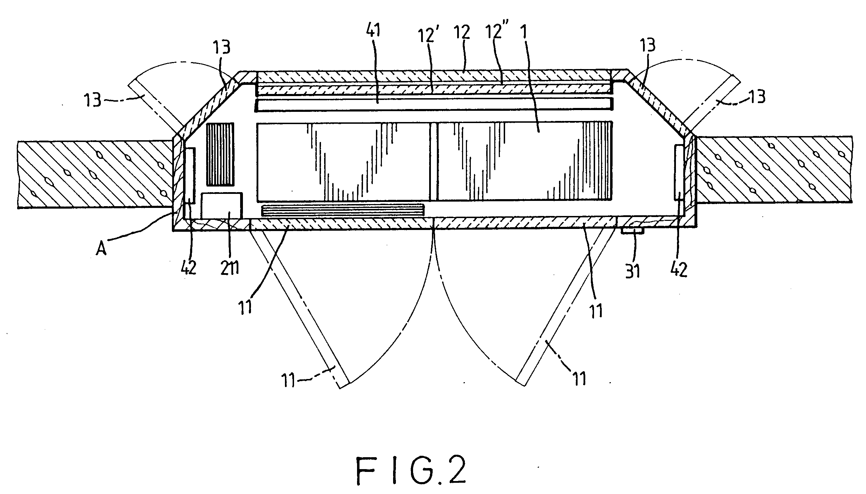

Turning to the drawings and referring first to figs. 1 & 2 of the present invention which comprises an enclosed housing A, a plant box 1, a watering system means 2, a temperature control means 3, a lighting means 4, and a humidity control means 5.

The enclosed housing A is to be positioned on a window opening. A windowsill of the window opening is provided with an elongated groove which is filled with soil for planting purpose and is referred to as plant box 1 hereinafter. The enclosed housing A includes two inwardly openable window panes 11 hingedly mounted on the inner side of the window opening, a fixed window pane 12 mounted on the outer side of the window opening having two openable window panes 13 laterally mounted to two sides of the outer window pane 12 thereof, a transparent board 12', preferably made from plastic material, mounted on the inner portion adjacent to the outer window pane 12, a panel A1 mounted to the front portion of the enclosed housing A, and a ventilator 14. All window panes have been treated with reflecting material at their inner ends as light supplement with but one exception, the transparent board window 12' which is adapted to isolate surrounding temperature. The immediate spacing area between the outer window pane 12, and the transparent board 12' may be filled with air, water or any other material that can isolate heat or chilly weather.

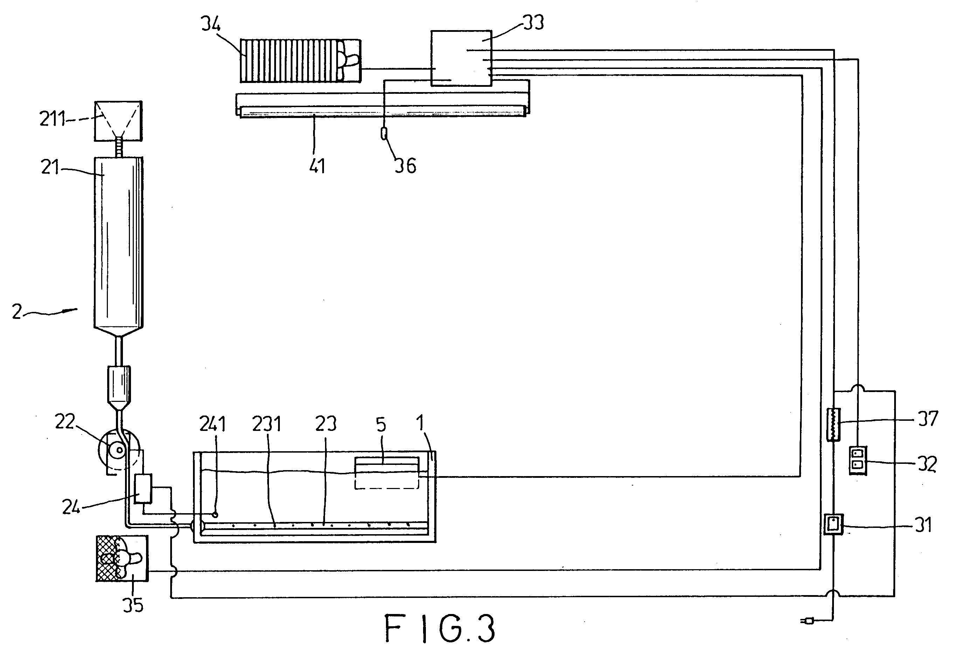

The watering system means 2, according to FIGS. 1, and 3, is composed of a water receptacle 21 fixedly mounted behind one side of the panel A1 having a transparent longitudinal window A11 at front to indicate liquid contained in the receptacle 21, a water flow control valve 22 coupled to the receptacle 21 through a monitor A 12 is controlled by a watering control circuit 24 to supply water to soil through a series of discharge ports 231 extending along the surface of a pipe member 23 which is connected to the valve 22. The pipe member 23 is embedded in the soil of the plant box 1.

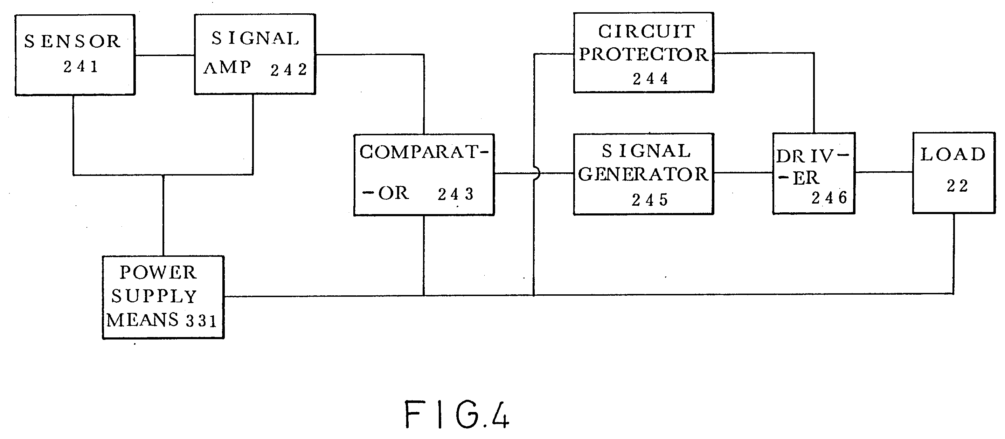

The watering control circuit 24 as shown in FIG. 4, located behind the panel A1 comprises a signal amplifier 242, a comparator 243, a circuit protector 244, a signal generator 245, a driver 246, and a load 247. Upon the sensor 241 encodes detected information of water contained in the soil into a signal and sends to the comparator 243 through signal amplifier 242 for comparison with a predetermined signal which has defined a basic requirement of water to be contained in soil. Should water contained in the soil be above the standard requirement after comparison, the comparator 243 will bypass the signal to ground. However, should water contained in the soil be less than the the basic requirement after comparison, the comparator 243 will trigger the signal generator 245 to activate the driver 246 to energize the control valve 22 to supply water into soil through the discharge ports 241 of the pipe member 24. Once water contained in the soil is compared larger or equal to the basic requirement, the comparator 243 will bypass the signal to ground and the control valve 22 stops pumping water into the soil through the pipe member 24. A circuit protector 44 will cut the main power source to protect the circuit from being overload.

The watering system may be connected to a water faucet to supply water to the soil in a predetermined time with a predetermined quantity or may be supplied manually.

The temperature control means 3, according to FIGS. 1 and 3, includes a main power switch 31, a fan switch 32, an exhausting fan 34 on top of the enclosed housing A, a temperature control circuit 33 behind the panel A11, a heating fan 35 at bottom portion of the housing A, and a sensor 36.

The temperature control circuit 33, according to FIG. 3, is connected to the power switch 31, through a circuit breaker 37, and to the fan switch 32, the exhausting fan 34, the heating fan 35. The exhausting fan 34 and the heating fan 35 are controlled by the temperature control circuit 33 automatically or controlled by manually.

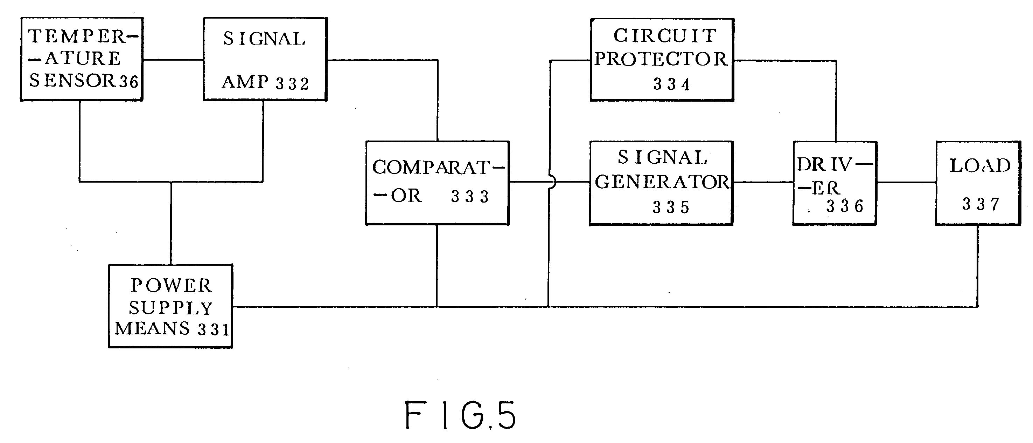

The temperature control circuit 33, according to FIG. 5, is composed of a sensor 36, a signal amplifier 332, a comparator 333, a circuit protector 334, a signal generator 335, a driver 336, and a load 337. The sensor 36 has one end attached to the inner portion of the enclosed housing A to detect temperature contained within the housing A. Upon the sensor 36 transmits the detected immediate surrounding temperature within the enclosed housing A to the comparator 333 via the signal amplifier 332, the signal will be compared with a prestored signal within the comparator 333 which defines a preferred temperature range between 12 to 29 degrees centigrate. Should the sensed immediate surrounding temperature be within the preferred temperature range after comparison, the comparator 333 will bypass the signal to ground. Should the immediate surrounding temperature be larger then the preferred temperature range, the comparator 333 will output a signal via the signal generator 335 to the driver 336 to activate the exhausting fan 34 to drop the temperature within a preferred temperature range. When the temperature detected is dropped within the preferred temperature range, the comparator 333 will stop transmitting signal to the driver 336 thus, the fan 34 is turned off. On the contrary, should the temperature detected by the sensor 36 be less than the preferred temperature range, the driver will be triggered to drive the heating fan 35 to increase the temperature within the enclosed housing A.

It is to be noted that the exhausting fan 34 and the heating fan 35 are manual operable by the fan switch 311.

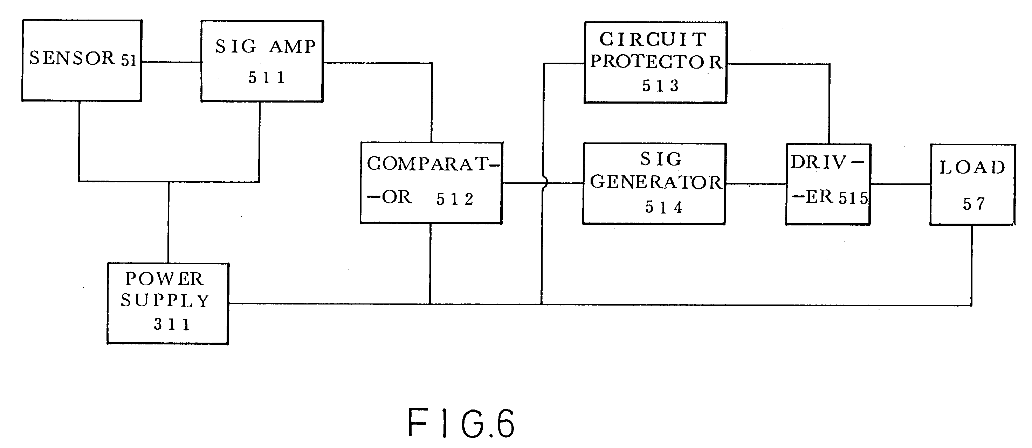

The humidity control means 5, according to FIG. 6 having a humidity control device 51 which is a sensor, a signal amplifier 511, a comparator 512, a circuit protector 513, a signal generator 514, a driver 515, and a load 516. The load may include a mist spray 52 and the exhausting fan 34. Upon detecting the humidity of the enclosed housing A, the sensor 51 encodes the information into a signal and transmits to the comparator 512 via the signal amplifier 511 for comparison with a predetermined signal which defines a preferred humidity limit and which may vary depending upon the plants. Should the humidity of the enclosed housing A be higher than the predetermined humidity limit after comparison, the comparator 512 will bypass the signal to ground. Should the detected humidity be less than the predetermined humidity limit after comparison, the comparator 512 will trigger the driver 515 through the signal generator 514 to activate the exhausting fan 34 and the mist spray 52 to spray water into the enclosed housing A to increase the humidity. Upon the detected humidity has reached to the reading as predetermined, the comparator 512 will bypass the signal to ground, thus the driver 515 is deactivated and the load 57 is turned off.

The mist spray 52 may be an ultrasonic device to spray mist into the enclosed housing A, as illustrated, or may be a water basin having a fan thereunder to blow water into the housing A.

The lighting means 4 includes two, but not limited to, elongated lamps 41 respectively mounted to the top and the bottom portions of the enclosed housing A, and plural reflectors 42 so as to reflet light as lighting supplement. The window panes, as previously described, being processed with special treatment at their inner portions may also reflect light and plants growing in the enclosed housing as well. The reflaction of the window panes can produce a kaleidoscopic image.

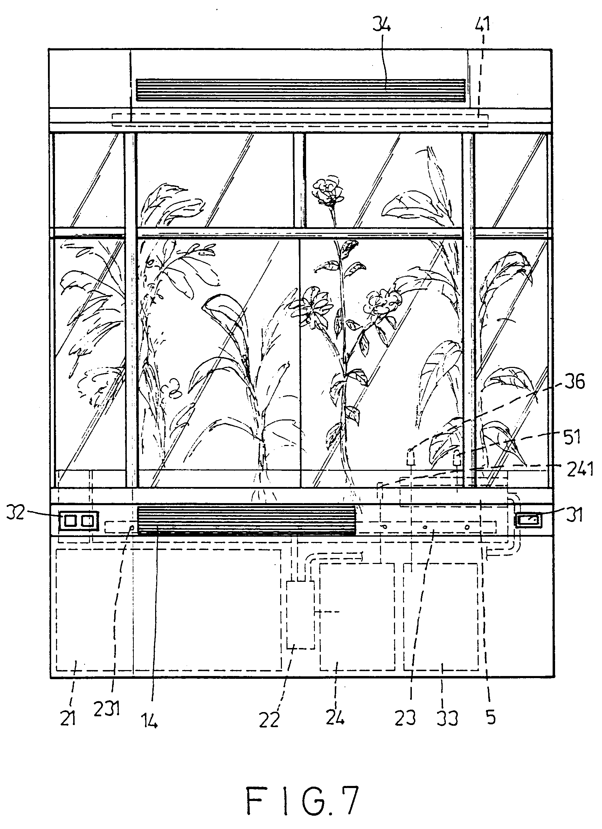

FIG. 7 is another embodiment of the present invention and has the receptacle 21, the watering control circuit 24, and the temperature control circuit 33 installed in a closet under the enclosed housing A, and has changed the water control valve 22 into a pump 22 which also controls water supply both to the soil and the humidity control system 5. The attachment of two pictures provides a better view of the present invention mounted at different places for different purposes.

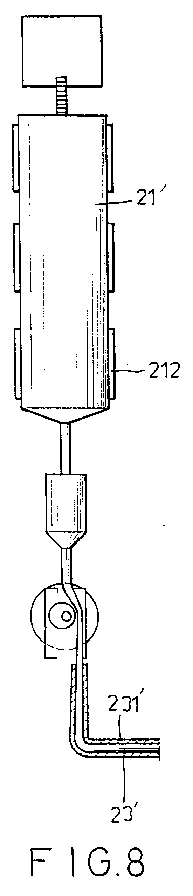

Referring now to FIG. 8, a second embodiment of the watering means 2 of the present invention. The liquid receptacle 21' may be filled with a plurality of heating elements 212 adapted to prevent liquid from freezing at places where temperature may be dropped below the minimum requirement. The pipe member 23' may also be wrapped around with temperature protective element 231', such as styrofoam material, adapted to prevent heat from loosing.

## Claims

1. A greenhouse fixedly mounted on a window opening having a windowsill, an inner side, and an outer side and comprising:
an enclosed housing fixedly mounted on said window opening having a first window pane (12) securely mounted to said outer side of said window opening, a second openable window pane (11) mounted to said inner side of said window opening, characterized by third and fourth openable window panes (13) with one each laterally mounted to each side of said first window pane (12);
an elongated plant box (1) formed as bottom portion of said enclosed housing containing soil to grow plants;
a watering means (2) mounted on said enclosed housing adjacent to said second openable window pane (11) having a liquid receptacle (21), a water flow control valve (22), and a pipe member (23); wherein said liquid receptacle (21) contains liquid for irregating plants through said water flow control valve (22) and then discharged from said pipe member (23); and wherein said pipe member (23) has plural discharge ports (231) spaced therealong;
a thermostat control means (3) fixedly mounted on said enclosed housing adjacent to said second openable window pane (11) including means for sensoring immediately surrounding temperature;
a cooling means (33) actuated by said sensoring means;
a heating means (3) actuated by said sensoring means;
a lighting means (4) being provided within said enclosed housing as artificial light to the plants for photosynthetic reaction;

2. Greenhouse according to claim 1, wherein said heating means (3) comprises a heating fan (35) and said cooling means (33) comprises an exhausting fan (34)

3. Greenhouse according to claim 1, wherein said cooling means comprises a second glass (12') fixedly mounted to the outer window opening spacing from said fixedly window pane (12); and said spacing being added with air, water, or any heat resistant liquid.

4. Greenhouse according to claim 1, wherein said watering means (2) comprises a control device (24) having a sensor embedded in the soil detecting water containing in the soil and controlling said water flow control valve (22).

5. Greenhouse according to claim 1, wherein said lighting means (4) comprises a plurality of elongated lamps (41) mounted in said enclosed housing, and a plurality of reflectors (42) mounted in said enclosed housing.

6. Greenhouse according to claim 1, wherein a second heating means comprises plural heating elements (212) mounted on said liquid receptacle (21'), and temperature protective element (231') wrapt around said pipe member (23').

7. Greenhouse according to claim 1, wherein said enclosed housing comprises a humidity control means (5) mounted on said plant box (1) to maintain humidity requirement within said enclosed housing.

## Patentansprüche

1. Gewächshaus, das fest an einer Fensteröffnung, die ein Fensterbrett, eine Innenseite und eine Außenseite aufweist, angebracht ist und umfaßt:
ein abgeschlossenes Gehäuse, das fest an der Fensteröffnung angebracht ist, das eine erste Fensterscheibe (12), die fest an der Außenseite der Fensteröffnung angebracht ist, und eine zweite zu öffnende Fensterscheibe (11) umfaßt, die an der Innenseite der Fensteröffnung angebracht ist, gekennzeichnet durch eine dritte und vierte zu öffnende Fensterscheibe (13), von denen jede seitlich an jede Seite der ersten Fensterscheibe (12) angebracht ist;
einen länglichen Pflanzkasten (1), der als Bodenteil des abgeschlossenen Gehäuses ausgebildet ist und Erde für das Pflanzenwachstum enthält;
eine Bewässerungseinrichtung (2), die am abgeschlossenen Gehäuse neben der zweiten zu öffnenden Fensterscheibe (11) befestigt ist und einen Flüssigkeitsbehälter (21), ein Regelventil (22) für den Wasserfluß und ein Leitungsteil (23) umfaßt, wobei der Flüssigkeitsbehälter (21) eine Flüssigkeit zum Bewässern der Pflanzen durch das Regelventil (22) für den Wasserfluß enthält, die dann aus dem Leitungsteil (23) abgegeben wird, und wobei das Leitungsteil (23) eine Anzahl entlang des Teils räumlich getrennter Abgabeöffnungen (231) aufweist;
eine Thermostatregeleinrichtung (3), die fest auf dem abgeschlossenen Gehäuse neben der zweiten zu öffnenden Fensterscheibe (11) befestigt ist und eine Einrichtung zum direkten Erfassen der Umgebungstemperatur umfaßt;
eine Kühleinrichtung (33), die von der Sensoreinrichtung betätigt wird;
eine Heizeinrichtung (3), die von der Sensoreinrichtung betätigt wird;
eine Beleuchtungseinrichtung (4), die im abgeschlossenen Gehäuse als künstliches Licht für die Pflanzen für die Photosynthesereaktion vorgesehen ist.

2. Gewächshaus nach Anspruch 1, wobei die Heizeinrichtung (3) einen Heizlüfter (35) und die Kühleinrichtung (33) ein Sauggebläse (34) umfaßt.

3. Gewächshaus nach Anspruch 1, wobei die Kühleinrichtung ein zweites Glas (12') umfaßt, das in einem Abstand zur festen Fensterscheibe (12) fest an der äußeren Fensteröffnung angebracht ist, wobei dem Zwischenraum Luft, Wasser oder einer wärmebeständigen Flüssigkeit zugesetzt wird.

4. Gewächshaus nach Anspruch 1, wobei die Bewässerungseinrichtung (2) eine Regeleinrichtung (24) umfaßt, die einen im Boden eingebetteten Sensor umfaßt, der das im Boden enthaltene Wasser erfaßt und das Regelventil (22) für den Wasserfluß steuert.

5. Gewächshaus nach Anspruch 1, wobei die Beleuchtungseinrichtung (4) eine Anzahl länglicher Lampen (41), die im abgeschlossenen Gehäuse befestigt sind, und eine Anzahl von Reflektoren (42) umfaßt, die im abgeschlossenen Gehäuse befestigt sind.

6. Gewächshaus nach Anspruch 1, wobei die zweite Heizeinrichtung eine Anzahl von Heizelementen (212), die auf dem Flüssigkeitsbehälter (21') befestigt sind, und ein Temperaturschutzelement (231') umfaßt, das um das Leitungsteil (23') gewickelt ist.

7. Gewächshaus nach Anspruch 1, wobei das abgeschlossene Gehäuse eine Feuchtigkeitsregeleinrichtung (5) umfaßt, die auf dem Pflanzkasten (1) befestigt ist, damit der Feuchtigkeitsbedarf im abgeschlossenen Gehäuse erhalten bleibt.

## Revendications

1. Serre montée à poste sur une ouverture de fenêtre possédant un appui de fenêtre, un bord intérieur, et un bord extérieur et comprenant :
- un châssis fermé monté à poste dans ladite ouverture de fenêtre possédant une première vitre (12) montée de manière fixe au bord extérieur de l'ouverture de fenêtre, une seconde vitre ouvrable (11) montée sur le bord intérieur de ladite ouverture de fenêtre, caractérisée par des troisième et quatrième vitres ouvrables (13), chacune étant montée latéralement sur chaque côté de ladite première vitre (12) ;
- un pot à plantes allongé (1) réalisé en tant que tronçon inférieur dudit châssis fermé et contenant de la terre pour faire pousser des plantes ;
- des moyens d'arrosage (2) montés sur le châssis fermé au voisinage de la deuxième vitre ouvrable (11) et possédant un réservoir de liquide (21), une vanne de commande (22) d'écoulement d'eau et un élément de tuyau (23), ledit réservoir de liquide (21) contenant du liquide de manière à irriguer des plantes par l'intermédiaire de la vanne de commande (22) d'écoulement d'eau et qui est ensuite déchargé depuis l'élément de tuyau (23) ; et l'élément de tuyau (23) possédant plusieurs orifices de décharge (231) espacés sur sa longueur ;
- des moyens de commande (3) thermostatiques montés à poste sur ledit châssis fermé au voisinage de la seconde vitre ouvrable (11) et comportant des moyens de détection de la température directement environnante ;
- des moyens réfrigérants (33) actionnés par les moyens de détection ;
- des moyens de chauffage (3) actionnés par les moyens de détection ;
- des moyens d'éclairage (4) étant prévus à l'intérieur du châssis fermé et ayant la forme de lumière artificielle en direction des plantes pour la réaction de photosynthèse.

2. Serre selon la revendication 1, dans laquelle les moyens de chauffage (3) comprennent un ventilateur de chauffage (35) et les moyens réfrigérants (33) comprennent un ventilateur d'évacuation (34).

3. Serre selon la revendication 1, dans laquelle les moyens réfrigérants comprennent une deuxième vitre (12') montée à poste dans l'ouverture de fenêtre externe en étant espacée de la vitre (12) montée à poste, et ledit espace étant occupé par de l'air, de l'eau, ou tout liquide non conducteur de chaleur.

4. Serre selon la revendication 1, dans laquelle les moyens d'arrosage (2) comprennent un dispositif de commande (24) possédant un capteur enfoui dans le sol qui détecte l'eau contenue dans ce sol et qui commande la vanne de commande (22) d'écoulement d'eau.

5. Serre selon la revendication 1, dans laquelle les moyens d'éclairage (4) comprennent une série de lampes allongées (41) montées dans le châssis fermé, et une série de réflecteurs (42) montés dans ce châssis fermé.

6. Serre selon la revendication 1, dans laquelle les seconds moyens de chauffage comprennent une série d'éléments chauffants (212) montés sur le réservoir de liquide (21'), et un élément (231') protégeant de la chaleur enroulé autour de l'élément de tuyau (23').

7. Serre selon la revendication 1, dans laquelle le châssis fermé comprend des moyens de commande (5) d'humidité montés sur le pot à plantes (1) de manière à maintenir l'humidité requise à l'intérieur de ce châssis fermé.
